(19) Europäisches Patentamt
European Patent Office
Office européen des brevets

(11) **EP 1 988 986 B1**

(12) **EUROPÄISCHE PATENTSCHRIFT**

(45) Veröffentlichungstag und Bekanntmachung des Hinweises auf die Patenterteilung:
**02.12.2009  Patentblatt 2009/49**

(21) Anmeldenummer: **07704591.2**

(22) Anmeldetag: **15.02.2007**

(51) Int Cl.:
**B01F 17/00** (2006.01)     **C11D 1/825** (2006.01)

(86) Internationale Anmeldenummer:
**PCT/EP2007/051463**

(87) Internationale Veröffentlichungsnummer:
**WO 2007/096292 (30.08.2007 Gazette 2007/35)**

(54) **TENSIDGEMISCH ENTHALTEND KURZKETTIGE SOWIE LANGKETTIGE KOMPONENTEN**

SURFACTANT MIXTURE CONTAINING SHORT-CHAIN AND ALSO LONG-CHAIN COMPONENTS

MELANGE DE TENSIOACTIFS COMPRENANT DES COMPOSANTS A CHAINE COURTE ET DES COMPOSANTS A CHAINE LONGUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.02.2006  EP 06110269**

(43) Veröffentlichungstag der Anmeldung:
**12.11.2008  Patentblatt 2008/46**

(73) Patentinhaber: **BASF SE**
**67056 Ludwigshafen (DE)**

(72) Erfinder:
• **STEINBRENNER, Ulrich**
  **67435 Neustadt (DE)**
• **KIEBURG, Christoffer**
  **67133 Maxdorf (DE)**
• **TROPSCH, Jürgen**
  **67354 Römerberg (DE)**
• **BAUR, Richard**
  **67112 Mutterstadt (DE)**
• **ZIMDAHL, Soeren**
  **69198 Schriesheim (DE)**
• **DAILEY, James, S.**
  **Grosse Ile, MI 48138 (US)**
• **LIPPERT, Ernst**
  **Oak Ridge, NJ 07438 (US)**
• **IYER, Sridhar, G.**
  **Matthews, NC 28104 (US)**

(74) Vertreter: **Isenbruck, Günter**
**Isenbruck Bösl Hörschler Wichmann LLP**
**Eastsite One**
**Seckenheimer Landstrasse 4**
**68163 Mannheim (DE)**

(56) Entgegenhaltungen:
| | |
|---|---|
| **EP-A- 1 690 921** | **EP-A1- 0 916 717** |
| **WO-A- 92/05235** | **WO-A-2006/018134** |
| **DE-A1- 10 116 021** | **DE-A1- 19 945 353** |
| **JP-A- 2004 091 686** | |

Bemerkungen:
Die Akte enthält technische Angaben, die nach dem Eingang der Anmeldung eingereicht wurden und die nicht in dieser Patentschrift enthalten sind.

## Beschreibung

Die vorliegende Erfindung betrifft ein Tensidgemisch, Formulierungen solche Tensidgemische enthaltend, Verfahren zur Herstellung der Tensidgemische sowie deren Verwendung.

Tenside sind amphiphile grenzflächenaktive Verbindungen, die einen hydrophoben sowie einen hydrophilen Molekülteil enthalten und zudem geladene oder ungeladene Gruppen aufweisen können. Tenside werden an Grenzflächen orientiert adsorbiert und verringern dadurch die Grenzflächenspannung, so dass diese in Lösung oberhalb der kritischen Micell-Bildungskonzentration Assoziationskolloide bilden können, so dass in wässrigen Lösungen an sich wasserunlösliche Stoffe solubilisiert werden.

Aufgrund dieser Eigenschaften werden Tenside beispielsweise zur Benetzung von Festkörpern, wie Fasern oder harten Oberflächen, eingesetzt. Hierbei werden Tenside häufig in Kombinationen untereinander sowie mit weiteren Hilfsstoffen eingesetzt. Typische Anwendungsgebiete sind Wasch- und Reinigungsmittel für Textilien und Leder, als Formulierung von Lacken und Farben sowie beispielsweise in der Erdölförderung.

Interessante Tenside sind insbesondere solche, die Alkoxylierungsprodukte von Alkoholen darstellen. Hierbei hat sich gezeigt, dass es insbesondere günstig ist, solche Verbindungen in unterschiedlichen Mischungen zur Verfügung zu stellen.

JP-A 2004/091686 beschreibt die Mischung von Tensiden, wobei ein alkoxylierter verzweigter aliphatischer Alkohol mit 8 bis 11 Kohlenstoffatomen mit einem weiteren aliphatischen Alkohol mit 12 bis 20 Kohlenstoffatomen, welcher ebenfalls alkoxyliert ist, vermischt wird.

JP-A 2003/336092 beschreibt ebenfalls Polyoxyalkylenalkylether, welche bestimmte Bedingungen erfüllen müssen.

JP-A 2004/035755 beschreibt ein nicht-ionisches oberflächenaktives Mittel, welche Alkylenoxydaddukte eines aliphatischen Alkohols mit einem HLB-Wert von 6 bis 14,5 sowie eines aliphatischen Alkohols mit einem HLB-Wert von 11 bis 16 aufweist.

WO-A 94/11330 beschreibt Alkoxylate von 2-Propylheptanol sowie deren Verwendung zur Reinigung von Textilmaterialien.

Dieselben Alkoxylate werden in WO-A 94/11331 zur Entfettung harter Oberflächen beschrieben.

Schließlich wird in DE-A 19921330 die Verwendung von verzweigten Fettalkoholethoxylaten mit 8 bis 22 Kohlenstoffatomen beschrieben, die als Waschmittel für Wolle eingesetzt werden können.

Trotz zahlreicher Tenside, die im Stand der Technik beschrieben sind, besteht nach wie vor ein Bedarf an Tensiden beziehungsweise Tensidgemischen, die zumindest teilweise bessere Eigenschaften als die aus dem Stand der Technik aufweisen. Solche Eigenschaften beziehen sich insbesondere auf deren Benetzungsverhalten, Salztoleranz, bei der Schaumbildung, geringe Neigung zur Gelbildung, deren Waschleistung und deren Emulsionsstabilität.

Eine Aufgabe der vorliegenden Erfindung liegt somit darin, ein Tensidgemisch bereitzustellen, welches zumindest in Bezug auf eine der oben ausgeführten Eigenschaften ein gegenüber Tensiden des Standes der Technik überlegenes Verhalten aufweist.

Die Aufgabe wird gelöst durch ein Tensidgemisch enthaltend

(A) eine kurzkettige Komponente enthaltend das Alkoxylierungsprodukt von Alkanolen, wobei die Alkanole 8 bis 12 Kohlenstoffatome aufweisen und die mittlere Anzahl der Alkoxygruppen pro Alkanolgruppe im Alkoxylierungsprodukt einen Wert von 3 bis 30 annimmt und die Alkoxygruppen ausgewählt sind aus der Gruppe bestehend aus Ethoxy-, Propoxy-, Butoxy- und Pentoxygruppe und die Alkanole einen mittleren Verzweigungsgrad von mindestens 1 aufweisen; und

(B) eine langkettige Komponente enthaltend das Alkoxylierungsprodukt von Alkanolen, wobei die Alkanole 16 bis 20 Kohlenstoffatome aufweisen und die mittlere Anzahl der Alkoxygruppen pro Alkanolgruppe im Alkoxylierungsprodukt einen Wert von 3 bis 30 annimmt und die Alkoxygruppen ausgewählt sind aus der Gruppe bestehend aus Ethoxy-, Propoxy-, Butoxy- und Pentoxygruppe und die Alkanole einen mittleren Verzweigungsgrad von 0,0 bis 0,3 aufweisen;

oder deren Phosphat-, Sulfatester und Ethercarboxylate, wobei das Verhältnis des Gewichtsanteils der kurzkettigen Komponente (A) im Tensidgemisch zu dem Gewichtsanteil der langkettigen Komponente (B) im Tensidgemisch einen Wert im Bereich von 97 : 3 bis 30 : 70 annimmt.

Der Verzweigungsgrad der Alkanole (des Alkanolgemisches) ist dabei wie folgt definiert:

Der Verzweigungsgrad eines Alkohols ergibt sich aus den Verzweigungen des Kohlenstoffgerüstes. Er ist für jedes Alkoholmolekül definiert als die Zahl der Kohlenstoffatome, die an drei weitere Kohlenstoffatome gebunden sind, plus zweimal der Zahl der Kohlenstoffatome, die an vier weitere Kohlenstoffatome gebunden sind. Der mittlere Verzweigungsgrad eines Alkoholgemisches ergibt sich aus der Summe aller Verzweigungsgrade der Einzelmoleküle dividiert durch die Zahl der Einzelmoleküle. Der Verzweigungsgrad wird beispielsweise über NMR-Methoden ermittelt. Dies kann durch Analyse des C-Gerüstes mit geeigneten Kopplungsmethoden (COSY, DEPT, INADE-QUATE), gefolgt von einer Quantifizierung via $^{13}$C NMR mit Relaxationsreagenzien erfolgen. Jedoch sind auch andere NMR-Methoden oder GC-MS Methoden möglich.

Die mittlere Anzahl an Alkoxygruppen ergibt sich aus der Summe aller Alkoxygruppen der Einzelmoleküle dividiert durch die Zahl der Einzelmoleküle.

Es wurde nämlich gefunden, dass ein wie oben näher beschriebenes Tensidgemisch aus kurzkettiger und langkettiger Komponente besonders gute Eigenschaften, insbesondere in Bezug auf die oben genannten Eigenschaften, aufweisen kann.

Das Tensidgemisch gemäß der vorliegenden Erfindung enthält eine kurzkettige Komponente (A), die das Alkoxylierungsprodukt von verzweigten Alkanolen aufweist, wobei die Alkanole 8 bis 12 Kohlenstoffatome aufweisen. Mehr bevorzugt weisen das Alkanole 9 bis 11 Kohlenstoffatome auf, insbesondere ist bevorzugt, wenn die Alkanole 10 Kohlenstoffatome aufweisen.

Die kurzkettige Komponente (A) des erfindungsgemäßen Tensidgemisches kann auch nur ein solches Alkanol, typischerweise aber eine Mischung solcher Alkanole enthalten.

Werden mehrere Alkanole für die kurzkettige Komponente (A) eingesetzt, ist für den Fall, dass das Alkanol 10 Kohlenstoffatome aufweist, bevorzugt, dass dieses Gemisch ein $C_{10}$-Guerbetalkoholgemisch darstellt. Hierbei sind die Hauptkomponenten 2-Propylheptanol sowie 5-Methyl-2-propylhexanol. Vorzugsweise besteht die kurzkettige Komponente (A) zu mindestens 90 %, vorzugsweise 95 %, aus einem solchen Gemisch.

Weiterhin ist bevorzugt, dass die kurzkettige Komponente kein Isodecanol enthält.

Der Alkoxylierungsgrad des oder der Alkanole für die kurzkettige Komponente (A) gemäß der vorliegenden Erfindung nimmt im Mittel Werte von 3 bis 30 Alkoxygruppen pro Alkanol an.

Die Alkoxygruppen können Ethoxy-, Propoxy-, Butoxy- und Pentoxygruppen sein. Es ist möglich, dass die Alkoxylierung statistisch verteilt oder blockweise erfolgt, so dass entsprechend blockweise Gruppen ausgewählt aus Ethoxy-, Propoxy-, Butoxy- und Pentoxygruppen auftreten können.

Es ist jedoch bevorzugt, dass das Alkoxylierungsprodukt für die kurzkettige Komponente (A) einen Anteil an Ethoxygruppen zur Gesamtzahl der Alkoxygruppen aufweist, die für das jeweilige Alkoxylierungsprodukt mindestens 0,5 beträgt. Mehr bevorzugt beträgt dies mindestens 0,75 und insbesondere ist bevorzugt, wenn das Alkoxylierungsprodukt ausschließlich Ethoxygruppen als Alkoxygruppen enthält.

Es ist bevorzugt, wenn das Alkanolgemisch der kurzkettigen Komponente (A) einen mittleren Verzweigungsgrad von 1,0 bis 2,0 aufweist. Mehr bevorzugt weist das Alkanolgemisch der kurzkettigen Komponente (A) einen mittleren Verzweigungsgrad im Bereich von 1 bis 1,5 auf.

Neben Alkoxylierungsprodukten von verzweigten Alkanolen, die die kurzkettige Komponente des Tensidgemisches bilden, ist es ebenfalls möglich, dass Alkoxylierungsprodukte von ungesättigten aliphatischen Alkoholen enthalten sind, wobei diese die gleiche Anzahl an Kohlenstoffatomen aufweisen können, wie die Alkanole für die kurzkettige Komponente (A). Es ist jedoch bevorzugt, wenn diese Gruppe von Verbindungen einen Gewichtsanteil bezogen auf ads Gesamtgewicht des Tensidgemisches unter 10 Gew.-%, vorzugsweise weniger als 5 Gew.-%, aufweist.

Weiterhin kann das Tensidgemisch Alkoxylierungsprodukte aufweisen, wobei Alkanole diese Produkte bilden, welche die oben angegebene Anzahl an Kohlenstoffatomen nicht aufweisen. Hierbei handelt es sich insbesondere um Alkanole mit 1 bis 7 Kohlenstoffatomen sowie Alkanole mit mehr als 12 Kohlenstoffatomen. Es ist jedoch bevorzugt, wenn diese Gruppe von Verbindungen einen Gewichtsanteil von höchstens 10 Gew.-%, vorzugsweise von weniger als 5 Gew.-% aufweist, bezogen auf das Gesamtgewicht des Tensidgemisches.

Darüber hinaus können Alkoxylierungsprodukte von verzweigten Alkanolen auftreten, die einen geringeren oder höheren Alkoxylierungsgrad aufweisen. Hierbei ist insbesondere ein Alkoxylierungsgrad von 1, 2 sowie 31 und mehr Alkoxygruppen zu nennen. Es ist bevorzugt, wenn diese Gruppe von Verbindungen weniger als 30 Gew.-%, vorzugsweise weniger als 15 Gew.-%, bezogen auf das Gesamtgewicht des Tensidgemisches, aufweist. Mehr bevorzugt sind weniger als 10 Gew.-%, insbesondere weniger als 5 Gew.-%.

Weiterhin umfasst das Tensidgemisch der vorliegenden Erfindung eine langkettige Komponente (B), die das Alkoxylierungsprodukt von Alkanolen aufweist, die einen mittleren Verzweigungsgrad von 0,0 bis 0,3 und mindestens 16 bis 20 Kohlenstoffatome aufweisen. Vorzugsweise weist das Alkanolgemisch der langkettigen Komponente (B) 16 bis 18 Kohlenstoffatome auf.

Die langkettige Komponente (B) kann auch das Alkoxylierungsprodukt eines einzigen Alkanols sein, jedoch weist diese typischerweise mehrere solcher Alkanole auf.

Für den Fall, dass Gemische eingesetzt werden, sind beispielsweise $C_{12}$-$C_{14}$-Kokosfettalkohole, native Alkohole oder aus dem Ziegler-ALFOL-Prozess erhaltene Alkanole denkbar. Ebenso kann Talgfettalkohol eingesetzt werden. Dieser Talgfettalkohol kann beispielsweise aus Baumwoll-, Lein-, Mais-, Oliven-, Erdnuss-, Raps-, Reiskleie-, Färberdistel-, Soja-, Sonnenblumenöl oder Rinder-, Schweine-, Geflügel-, Fischfett hergestellt werden. Vorzugsweise besteht die langkettige Komponente (B) zu mindestens 90 Gew.- %, vorzugsweise aus mindestens 95 Gew.-% aus einem solchen Gemisch.

Der mittlere Alkoxylierungsgrad des Alkanolgemisches für die langkettige Komponente (B) gemäß der vorliegenden Erfindung nimmt Werte von 3 bis 30 Alkoxygruppen pro Alkanol an.

Die Alkoxygruppen können Ethoxy-, Propoxy-, Butoxy- und Pentoxygruppen sein. Es ist möglich, dass die Alkoxylierung statistisch verteilt oder blockweise erfolgt, so dass entsprechend blockweise Gruppen ausgewählt aus Ethoxy-, Propoxy-, Butoxy- und Pentoxygruppen auftreten können.

Es ist jedoch bevorzugt, dass das Alkoxylierungsprodukt für die langkettige Komponente (B) einen Anteil an Ethoxygruppen zur Gesamtzahl der Alkoxygruppen aufweist, die für das jeweilige Alkoxylierungsprodukt mindestens 0,5 beträgt. Mehr bevorzugt beträgt dies mindestens 0,75 und insbesondere ist bevorzugt, wenn das Alkoxylierungsprodukt ausschließlich Ethoxygruppen als Alkoxygruppen enthält.

Das Alkanolgemisch der langkettigen Komponente (B) weist einen mittleren Verzweigungsgrad von 0,0 bis 0,3 auf.

Neben Alkoxylierungsprodukten von solchen Alkanolen, die die langkettige Komponente (B) des Tensidgemisches bilden, ist es ebenfalls möglich, dass Alkoxylierungsprodukte von ungesättigten aliphatischen Alkoholen enthalten sind, wobei diese die gleiche Anzahl an Kohlenstoffatomen aufweisen können, wie die Alkanole für die langkettige Komponente (B). Es ist jedoch bevorzugt, wenn diese Gruppe von Verbindungen einen Gewichtsanteil bezogen auf das Gesamtgewicht des Tensidgemisches unter 30 Gew.-%, vorzugsweise weniger als 15 Gew.-% aufweist. Mehr bevorzugt beträgt der Anteil weniger als 10 Gew.-%, insbesondere weniger als 5 Gew.-%.

Weiterhin kann das Tensidgemisch Alkoxylierungsprodukte aufweisen, wobei Alkanole diese Produkte bilden, welche die oben angegebene Anzahl an Kohlenstoffatomen nicht aufweisen. Hierbei handelt es sich insbesondere um Alkanole mit 1 bis 12 Kohlenstoffatomen sowie Alkanole mit mehr als 20 Kohlenstoffatomen. Es ist jedoch bevorzugt, wenn diese Gruppe von Verbindungen einen Gewichtsanteil von höchstens 10 Gew.-%, vorzugsweise höchstens 5 Gew.-%, bezogen auf das Gesamtgewicht des Tensidgemisches, aufweist.

Darüber hinaus können Alkoxylierungsprodukte von Alkanolen mit Verzweigung von 0 bis 0,3 auftreten, die einen geringeren oder höheren Alkoxylierungsgrad aufweisen. Hierbei ist insbesondere ein Alkoxylierungsgrad von 1, 2 sowie 31 und mehr Alkoxygruppen zu nennen. Es ist bevorzugt, wenn diese Gruppe von Verbindungen weniger als 30 Gew.-%, vorzugsweise weniger als 15 Gew.-%, bezogen auf das Gesamtgewicht des Tensidgemisches, aufweist. Mehr bevorzugt liegt der Anteil unter 10 Gew.-%, insbesondere unter 5 Gew.-%.

Das Verhältnis des Gewichtsanteils der kurzkettigen Komponente (A) im Tensidgemisch zu dem Gewichtsanteil der langkettigen Komponente (B) im Tensidgemisch beträgt 97 : 3 bis 30 : 70, bevorzugt 95 : 5 bis 50 : 50 und insbesondere bevorzugt 90 : 10 bis 70 : 30.

Der jeweilige Anteil an Komponenten (A) bzw. (B) in Bezug auf den Gesamtanteil des Tensidgemisches beträgt vorzugsweise jeweils mindestens 50 Gew.-%, mehr bevorzugt mindestens 60 Gew.-%, weiter mehr bevorzugt mindestens 75 Gew.-%, weiterhin mehr bevorzugt 90 Gew.-%, bezogen auf das Gesamtgewicht des Tensidgemisches.

Bevorzugt liegt der HLB-Wert nach Griffin im Bereich von 10 bis 15 für das Tensidgemisch gemäß der vorliegenden Erfindung.

Das Tensidgemisch der vorliegenden Erfindung enthält Komponenten (A) und (B), die jeweils mindestens ein Alkoxylierungsprodukt von Alkoholen enthalten. Das erfindungsgemäße Tensidgemisch kann auch noch Reste der nicht umgesetzten Alkohole enthalten. Es ist jedoch bevorzugt, wenn deren Anteil unter 15 Gew.-%, besonders bevorzugt unter 10 Gew.-%, bezogen auf das Gesamtgewicht des Tensidgemisches aufweist.

Die Alkoxylierungsprodukte können als solche eingesetzt werden, oder es werden deren Phosphate, Sulfatester oder Ethercarboxylate (Carbonate) eingesetzt. Diese können neutral sein oder als Salz vorliegen. Geeignete Gegenionen sind Alkali- und Erdalkalimetallkationen oder Ammoniumionen sowie Alkyl- und Alkanolammoniumionen.

Ein weiterer Gegenstand der vorliegenden Erfindung ist eine Formulierung enthaltend ein erfindungsgemäßes Tensidgemisch.

Die Formulierung kann beispielsweise 0,01 bis 90 Gew.-% Wasser enthalten. Darüber hinaus oder alternativ kann die Formulierung weitere Tenside oder Hydrotrope beziehungsweise deren Gemische aufweisen. Beispielsweise seien hier Alkoholalkoxylate der Formel $P(O-R-Ao_n)_m-H$ genannt, wobei P ein gesättigtes, ungesättigtes oder aromatisches Kohlenstoffgerüst ist, an welchem m Alkoholfunktionen angeknüpft sind, welche wiederum mit im Mittel je n Alkylenoxid-Einheiten verethert wurden. n besitzt hierbei einen Wert von 1 bis 4 und m einen Wert von 1 bis 10. R ist eine Alkylengruppe mit 1 bis 10 C-Atomen, Ao ist ein $C_2-C_5$-Alkylenoxid. Beispiele hierfür sind Methylethylenglykole, Butylethylenglykole, Pentylethylenglykole, Hexylethylenglykole, Butylpropylenglykole, Trimethylolpropanethoxylate, Glycerinethoxylate, Pentaerythritethoxylate, Ethoxylate und Propoxylate des Bisphenol A.

Ein weiterer Gegenstand der vorliegenden Erfindung ist ein Verfahren zur Herstellung eines erfindungsgemäßen Tensidgemisches die Schritte enthaltend.

(a) Alkoxylierung eines Alkanolgemisches, wobei das Gemisch 8 bis 12 Kohlenstoffatome aufweist und die mittlere Anzahl der Alkoxygruppen pro Alkanolgruppe im Alkoxylierungsprodukt einen Wert von 3 bis 30 annimmt und die Alkoxygruppen ausgewählt sind aus der Gruppe bestehend aus Ethoxy-, Propoxy-, Butoxy- und Pentoxygruppe und das Alkanolgemisch einen mittleren Verzweigungsgrad von mindestens 1, bevorzugt 1,0 bis 2, mehr bevorzugt 1,0 bis 1,5 aufweist;

(b) Alkoxylierung eines Alkanolgemisches, wobei das Alkanolgemisch 16 bis 20 Kohlenwasserstoffatome, aufweist und die mittlere Anzahl der Alkoxygruppen pro Alkanolgruppe im Alkoxylierungsprodukt einen Wert von 3 bis 30 annimmt und die Alkoxylierungsgruppen ausgewählt sind aus der Gruppe bestehend aus Ethoxy-, Propoxy-, Butoxy- und Pentoxygruppen und das Alkanolgemisch einen mittleren Verzweigungsgrad von 0,0 bis 0,3 aufweist und

(c) Mischen der in Schritt (a) und (b) erhaltenen Alkoxylierungsprodukte.

Neben dem oben beschriebenen Verfahren zur Herstellung eines Tensidgemisches können auch die entsprechenden Alkanole für die kurzkettige Komponente (A) und langkettige Komponente (B) vor der Alkoxylierung gemischt werden und dann das Gemisch anschließend einer Alkoxylierung unterworfen werden.

Demzufolge ist ein weiterer Gegenstand der vorliegenden Erfindung ein Verfahren zur Herstellung eines Tensidgemisches nach der vorliegenden Erfindung, die Schritte enthaltend

(a) Mischen eines ersten Alkanolgemisches, das 8 bis 12 Kohlenstoffatome und einen mittleren Verzweigungsgrad von mindestens 1 aufweist mit mindestens einem zweiten Alkanolgemisch, das 16 bis 20 Kohlenstoffatome und einen mittleren Verzweigungsgrad von 0,0 bis 0,3 aufweist; und

(b) Alkoxylieren des Gemisches aus ersten und zweitem Gemisch aus Schritt (a), wobei die Anzahl der Alkoxygruppen pro Alkanolgruppe im Alkoxylierungsprodukt einen mittleren Wert von 3 bis 30 annimmt und die Alkoxygruppe ausgewählt ist aus der Gruppe bestehend aus Ethoxy-, Propoxy-, Butoxy- und Pentoxygruppe.

Die erfindungsgemäßen Tensidgemische beziehungsweise Formulierungen können beispielsweise als Tensidformulierungen zur Reinigung harter Oberflächen verwendet werden. Geeignete Tensidformulierungen, die mit den erfindungsgemäßen Tensidgemischen additiviert werden können, sind beispielsweise in Formulating Detergents and Personal Care Products von Louis Ho Tan Tai, AOCS Press, 2000 beschrieben.

Sie enthalten beispielsweise als weitere Komponenten Seife, anionische Tenside wie LAS (lineares Alkylbenzolsulfonat) oder Paraffinsulfonate oder FAS (Fettalkoholsulfat) oder FAES (Fettalkoholethersulfat), Säure wie Phosphorsäure, Amidosulfonsäure, Zitronensäure, Milchsäure, Essigsäure, andere organische und anorganische Säuren, Lösungsmittel wie Ethylenglykol, Isopropanol, Komplexbildner wie EDTA (N,N,N',N'-Ethylendiamintetraessigsäure), NTA (N,N,N-Nitrilotriessigsäure), MGDA (2-Methylglycin-N,N-diessigsäure), Phosphonate, Polymere wie Polyacrylate, Copolymere Maleinsäure-Acrylsäure, Alkalispender wie Hydroxide, Silikate, Carbonate, Parfümöle, Oxidationsmittel wie Perborate, Persäuren oder Trichlorisocyanursäure, Na- oder K-Dichlorisocyanurate, Enzyme; siehe auch Milton J. Rosen, Manilal Dahanayake, Industrial Utilization of Surfactants, AOCS Press, 2000 und Nikolaus Schönfeldt, Grenzflächenaktive Ethylenoxyaddukte. Hier sind auch Formulierungen für die anderen genannten Anwendungen im Prinzip abgehandelt. Es kann sich um Haushaltsreiniger wie Allzweckreiniger, Geschirrspülmittel für manuelles wie automatisches Geschirrspülen, Metallentfettung, industrielle Applikationen wie Reinigungsmittel für die Nahrungsmittelindustrie, Flaschenwäsche, etc. handeln. Es kann sich auch um Druckwalzen- und Druckplattenreinigungsmittel in der Druckindustrie handeln. Geeignete weitere Inhaltsstoffe sind dem Fachmann bekannt.

Verwendungen eines erfindungsgemäßen Tensidgemisches beziehungsweise einer erfindungsgemäßen Formulierung sind:

- Feuchthaltemittel, insbesondere für die Druckindustrie.

- Kosmetische, pharmazeutische und Pflanzenschutzformulierungen. Geeignete Pflanzenschutzformulierungen sind beispielsweise in EP-A 0 050 228 beschrieben. Es können für Pflanzenschutzmittel übliche weitere Inhaltsstoffe vorliegen.

- Lacke, Beschichtungsmittel, Farben, Pigmentpräparationen sowie Klebstoffe in der Lack- und Folienindustrie.

- Lederentfettungsmittel.

- Formulierungen für die Textilindustrie wie Egalisiermittel oder Formulierungen zur Garnreinigung.

- Faserverarbeitung und Hilfsmittel für die Papier- und Zellstoffindustrie.

- Metallverarbeitung wie Metallveredelung und Galvanobereich.

- Lebensmittelindustrie.

- Wasserbehandlung und Trinkwassergewinnung.

- Fermentation.

- Mineralverarbeitung und Staubkontrolle.

- Bauhilfsmittel.

- Emulsionspolymerisation und Herstellung von Dispersionen.

- Kühl- und Schmiermittel.

Solche Formulierungen enthalten üblicherweise Inhaltsstoffe wie Tenside, Gerüst-, Duft- und Farbstoffe, Komplexbildner, Polymere und andere Inhaltsstoffe. Typische Formulierungen sind beispielsweise in WO 01/32820 beschrieben. Weitere für unterschiedliche Anwendungen geeignete Inhaltsstoffe sind in EP-A 0 620 270, WO 95/27034, EP-A 0 681 865, EP-A 0 616 026, EP-A 0 616 028, DE-A 42 37 178 und US 5,340,495 und in Schönfeldt, s.o. beispielhaft beschrieben.

Im Allgemeinen können die erfindungsgemäßen Zusammensetzungen in allen Bereichen eingesetzt werden, in denen die Wirkung von grenzflächenaktiven Stoffen notwendig ist.

Die vorliegende Erfindung betrifft daher auch Wasch-, Reinigungs-, Netz-, Beschichtungs-, Klebe-, Lederentfettungs-, Feuchthalte- oder Textilbehandlungsmittel oder kosmetische, pharmazeutische oder Pflanzenschutzformulierungen, enthaltend eine erfindungsgemäße Zusammensetzung oder eine Zusammensetzung hergestellt nach einem efindungsgemäßen Verfahren. Die Mittel enthalten dabei vorzugsweise 0,1 bis 80 Gew.-% der Zusammensetzungen.

Zu den üblichen Bestandteilen der erfindungsgemäßen Waschmittel, insbesondere Textilwaschmittel zählen beispielsweise Builder, Tenside, Bleichmittel, Enzyme und weitere Inhaltsstoffe, wie sie nachstehend beschrieben sind.

**Builder**

Zur Kombination mit den erfindungsgemäßen Tensiden geeignete anorganische Builder (A') sind vor allem kristalline oder amorphe Alumosilicate mit ionenaustauschenden Eigenschaften wie insbesondere Zeolithe. Verschiedene Typen von Zeolithen sind geeignet, insbesondere Zeolithe A, X, B, P, MAP und HS in ihrer Na-Form oder in Formen, in denen Na teilweise gegen andere Kationen wie Li, K, Ca, Mg oder Ammonium ausgetauscht ist. Geeignete Zeolithe sind beispielsweise beschrieben in EP-A 0 038 591, EP-A 0 021 491, EP-A 0 087 035, US-A 4,604,224, GB-A 2 013 259, EP-A 0 522 726, EP-A 0 384 070 und WO-A 94/24251.

Geeignete kristalline Silicate (A') sind beispielsweise Disilicate oder Schichtsilicate, z. B. SKS-6 (Hersteller: Hoechst). Die Silicate können in Form ihrer Alkalimetall-, Erdalkalimetall- oder Ammoniumsalze eingesetzt werden, vorzugsweise als Na-, Li- und Mg-Silicate.

Amorphe Silicate wie beispielsweise Natriummetasilicat, welches eine polymere Struktur aufweist, oder Britesil® H20 (Hersteller: Akzo) sind ebenfalls verwendbar.

Geeignete anorganische Buildersubstanzen auf Carbonat-Basis sind Carbonate und Hydrogencarbonate. Diese können in Form ihrer Alkalimetall-, Erdalkalimetall oder Ammoniumsalze eingesetzt werden. Vorzugsweise werden Na, Li- und Mg-Carbonate bzw. -Hydrogencarbonate, insbesondere Natriumcarbonat und/oder Natriumhydrogencarbonat, eingesetzt.

Übliche Phosphate als anorganische Builder sind Polyphosphate wie z. B. Pentanatriumtriphosphat.

Die genannten Komponenten (A') können einzeln oder in Mischungen untereinander eingesetzt werden. Von besonderem Interesse ist als anorganische Builder-Komponente eine Mischung aus Alumosilicaten und Carbonaten, insbesondere aus Zeolithen, vor allem Zeolith A, und Alkalimetallcarbonaten, vor allem Natriumcarbonat, im Gew.-Verhältnis von 98:2 bis 20:80, insbesondere von 85:15 bis 40:60. Neben dieser Mischung können noch andere Komponenten (A') vorliegen.

In einer bevorzugten Ausführungsform enthält die erfindungsgemäße Textilwaschmittel-Formulierung 0,1 bis 20 Gew.-%. insbesondere 1 bis 12 Gew.-% organische Cobuilder (B') in Form von niedermolekularen, oligomeren oder polymeren Carbonsäuren, insbesondere Polycarbonsäuren, oder Phosphonsäuren oder deren Salzen, insbesondere Na- oder K-Salzen.

Geeignete niedermolekulare Carbonsäuren oder Phosphonsäuren für (B') sind beispielsweise:

$C_4$-$C_{20}$-Di-, -Tri- und -Tetracarbonsäuren wie z.B. Bernsteinsäure. Propantricarbonsäure, Butantetracarbonsäure, Cyclopentantetracarbonsäure und Alkyl- und Alkenylbernsteinsäuren mit $C_2$-$C_{16}$-Alkyl- bzw. -Alkenyl-Resten;

$C_4$-$C_{20}$-Hydroxycarbonsäuren wie z.B. Äpfelsäure, Weinsäure, Gluconsäure, Glutarsäure, Citronensäure, Lactobionsäure und Saccharosemono-, -di- und -tricarbonsäure;

Aminopolycarbonsäuren wie z.B. Nitrilotriessigsäure, β-Alanindiessigsäure, Ethylendiamintetraessigsäure, Serindiessigsäure, Isoserindiessigsäure, Methylglycindiessigsäure und Alkylethylendiamintriacetate;

Salze von Phosphonsäuren wie z.B. Hydroxyethandiphosphonsäure.

Geeignete oligomere oder polymere Carbonsäuren für (B') sind beispielsweise:

Oligomaleinsäuren, wie sie beispielsweise in EP-A 451 508 und EP-A 396 303 beschrieben sind;

Co- und Terpolymere ungesättigter $C_4$-$C_8$-Dicarbonsäuren, wobei als Comonomere monoethylenisch ungesättigte Monomere

aus der Gruppe (i) in Mengen von bis zu 95 Gew.-%,

aus der Gruppe (ii) in Mengen von bis zu 60 Gew.-% und

aus der Gruppe (iii) in Mengen von bis zu 20 Gew.-%

einpolymerisiert sein können.

Als ungesättigte $C_4$-$C_8$-Dicarbonsäuren sind hierbei beispielsweise Maleinsäure, Fumarsäure, Itaconsäure und Citraconsäure geeignet. Bevorzugt ist Maleinsäure.

Die Gruppe (i) umfasst monoethylenisch ungesättigte $C_3$-$C_8$-Monocarbonsäuren wie z.B. Acrylsäure, Methacrylsäure, Crotonsäure und Vinylessigsäure. Bevorzugt werden aus der Gruppe (i) Acrylsäure und Methacrylsäure eingesetzt.

Die Gruppe (ii) umfasst monoethylenisch ungesättigte $C_2$-$C_{22}$-Olefine, Vinylalkylether mit $C_1$-$C_8$-Alkylgruppen, Styrol, Vinylester von $C_1$-$C_8$-Carbonsäuren, (Meth)acrylamid und Vinylpyrrolidon. Bevorzugt werden aus der Gruppe (ii) $C_2$-$C_6$-Olefine, Vinylalkylether mit $C_1$-$C_4$-Alkylgruppen, Vinylacetat und Vinylpropionat eingesetzt.

Die Gruppe (iii) umfasst (Meth)acrylester von $C_1$-$C_8$-Alkoholen, (Meth)acrylnitril, (Meth)acrylamide von $C_1$-$C_8$-Aminen, N-Vinylformamid und Vinylimidazol.

Falls die Polymeren der Gruppe (ii) Vinylester einpolymerisiert enthalten, können diese auch teilweise oder vollständig zu Vinylalkohol-Struktureinheiten hydrolysiert vorliegen. Geeignete Co- und Terpolymere sind beispielsweise aus US-A 3 887 806 sowie DE-A 43 13 909 bekannt.

Als Copolymere von Dicarbonsäuren eignen sich für (B') vorzugsweise:

Copolymere von Maleinsäure und Acrylsäure im Gewichtsverhältnis 100:90 bis 95:5, besonders bevorzugt solche im Gewichtsverhältnis 30:70 bis 90:10 mit Molmassen von 100.000 bis 150.000;

Terpolymere aus Maleinsäure, Acrylsäure und einem Vinylester einer $C_1$-$C_3$-Carbonsäure im Gewichtsverhältnis 10 (Maleinsäure):90 (Acrylsäure + Vinylester) bis 95 (Maleinsäure):10 (Acrylsäure + Vinylester), wobei das Gewichtsverhältnis von Acrylsäure zum Vinylester im Bereich von 30:70 bis 70:30 variieren kann;

Copolymere von Maleinsäure mit $C_2$-$C_8$-Olefinen im Molverhältnis 40:60 bis 80:20, wobei Copolymere von Maleinsäure mit Ethylen, Propylen oder Isobuten im Molverhältnis 50:50 besonders bevorzugt sind.

Pfropfpolymere ungesättigter Carbonsäuren auf niedermolekulare Kohlenhydrate oder hydrierte Kohlenhydrate, vgl. US-A 5 227 446, DE-A 44 15 623 und DE-A 43 13 909, eignen sich ebenfalls als (B').

Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden.

Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii).

Als Pfropfgrundlage sind abgebaute Polysaccharide wie z.B. saure oder enzymatisch abgebaute Stärken, Inuline oder Zellulose, Eiweißhydrolysate und reduzierte (hydrierte oder hydrierend aminierte) abgebaute Polysaccharide wie z.B. Mannit, Sorbit, Aminosorbit und N-Alkylglucamin geeignet sowie auch Polyalkylenglycole mit Molmassen mit bis zu $M_w = 5.000$ wie z.B. Polyethylenglycole, Ethylenoxid/Propylenoxid- bzw. Ethylenoxid/Butylenoxid- bzw. Ethylenoxid/Propylenoxid/Butylenoxid-Blockcopolymere und alkoxylierte ein- oder mehrwertige $C_1$-$C_{22}$-Alkohole, vgl. US-A 5 756 456.

Bevorzugt werden aus dieser Gruppe gepfropfte abgebaute bzw. abgebaute reduzierte Stärken und gepfropfte Polyethylenoxide eingesetzt, wobei 20 bis 80 Gew.-% Monomere, bezogen auf die Pfropfkomponente, bei der Pfropfpolymerisation eingesetzt werden. Zur Pfropfung wird vorzugsweise eine Mischung von Maleinsäure und Acrylsäure im Gewichtsverhältnis von 90:10 bis 10:90 eingesetzt.

Als (B') geeignete Polyglyoxylsäuren sind beispielsweise beschrieben in EP-B 001 004, US-A 5 399 286, DE-A 41 06 355 und EP-A 0 656 914. Die Endgruppen der Polyglyoxylsäuren können unterschiedliche Strukturen aufweisen.

Als (B') geeignete Polyamidocarbonsäuren und modifizierte Polyamidocarbonsäuren sind beispielsweise bekannt aus EP-A 454 126, EP-B 511 037, WO-A 94/01486 und EP-A 581 452.

Als (B') verwendet man insbesondere auch Polyasparaginsäuren oder Cokondensate der Asparaginsäure mit weiteren Aminosäuren, $C_4$-$C_{25}$-Mono- oder -Dicarbonsäuren und/oder $C_4$-$C_{25}$-Mono- oder -Diaminen. Besonders bevorzugt werden in phosphorhaltigen Säuren hergestellte, mit $C_6$-$C_{22}$-Mono- oder Dicarbonsäuren bzw. mit $C_6$-$C_{22}$-Mono- oder -Diaminen modifizierte Polyasparaginsäuren eingesetzt.

Als (B') geeignete Kondensationsprodukte der Zitronensäure mit Hydroxycarbonsäuren oder Polyhydroxyverbindungen sind z.B. bekannt aus WO-A 93/22362 und WO-A 92/16493. Solche Carboxylgruppen enthaltende Kondensate haben üblicherweise Molmassen bis zu 10.000, vorzugsweise bis zu 5.000.

Als (B') eignen sich weiterhin Ethylendiamindibernsteinsäure, Oxydibemsteirisäure, Aminopolycarboxylate, Aminopolyalkylenphosphonate und Polyglutamate.

Weiterhin können zusätzlich zur (B') oxidierte Stärken als organische Cobuilder verwendet werden.

**Tenside**

Neben dem erfindungsgemäßen Tensidgemisch können weitere Tenside eingesetzt werden.

Geeignete anionische Tenside (C) sind beispielsweise Fettalkoholsulfate von Fettalkoholen mit 8 bis 22, vorzugsweise 10 bis 18 Kohlenstoffatomen, z. B. $C_9$-$C_{11}$-Alkoholsulfate, $C_{12}$-$C_{14}$-Alkoholsulfate, Cetylsulfat, Myristylsulfat, Palmitylsulfat, Stearylsulfat und Talgfettalkoholsulfat.

Weitere geeignete anionische Tenside sind Alkansulfonate wie $C_8$-$C_{24}$-, vorzugsweise $C_{10}$-$C_{18}$-Alkansulfonate sowie Seifen wie beispielsweise die Na- und K-Salze von $C_8$-$C_{24}$-Carbonsäuren.

Weitere geeignete anionische Tenside sind $C_9$-$C_{20}$-linear-Alkylbenzolsulfonate (LAS) und -Alkyltoluolsulfonate.

Weiterhin eignen sich als anionische Tenside (C) noch $C_8$-$C_{24}$-Olefinsulfonate und -disulfonate, welche auch Gemische aus Alken- und Hydroxyalkansulfonaten bzw. -disulfonate darstellen können, Alkylestersulfonate, sulfonierte Polycarbonsäuren, Alkylglycerinsulfonate, Fettsäureglycerinestersulfonate, Alkylphenolpolyglykolethersulfate, Paraffinsulfonate mit ca. 20 bis ca. 50 C-Atomen (basierend auf aus natürlichen Quellen gewonnenem Paraffin oder Paraffingemischen), Alkylphosphate, Acylisethionate, Acyltaurate, Acylmethyltaurate, Alkylbernsteinsäuren, Alkenylbernsteinsäuren oder deren Halbester oder Halbamide, Alkylsulfobernsteinsäuren oder deren Amide, Mono- und Diester von Sulfobernsteinsäuren, Acylsarkosinate, sulfatierte Alkylpolyglucoside, Alkylpolyglykolcarboxylate sowie Hydroxyalkylsarkosinate.

Die anionischen Tenside werden dem Waschmittel vorzugsweise in Form von Salzen zugegeben. Geeignete Kationen in diesen Salzen sind Alkalimetallionen wie Natrium, Kalium und Lithium und Ammoniumsalze wie zum Beispiel Hydroxyethylammonium-, Di(hydroxyethyl)ammonium- und Tri(hydroxyethyl)ammoniumsalze.

Die Komponente (C) liegt in der erfindungsgemäßen Textilwaschmittel-Formulierung vorzugsweise in einer Menge von 3 bis 30 Gew.-%, insbesondere 5 bis 20 Gew.-% vor. Werden $C_9$-$C_{20}$-linear-Alkylbenzolsulfonate (LAS) mitverwendet, kommen diese üblicherweise in einer Menge bis zu 25 Gew.-%, insbesondere bis zu 20 Gew.-%, zum Einsatz. Es kann nur eine Klasse an anionischen Tensiden allein eingesetzt werden, beispielsweise nur Fettalkoholsulfate oder nur Alkylbenzolsulfonate, man kann aber auch Mischungen aus verschiedenen Klassen verwenden, z. B. eine Mischung aus Fettalkoholsulfaten und Alkylbenzolsulfonaten. Innerhalb der einzelnen Klassen an anionischen Tensiden können auch Mischungen unterschiedlicher Species zum Einsatz gelangen.

Eine weitere Klasse geeigneter Tenside sind nichtionische Tenside D zu nennen, insbesondere Alkylphenolalkoxylate wie Alkylphenolethoxylate mit $C_6$-$C_{14}$-Alkylketten und 5 bis 30 mol Alkylenoxideinheiten.

Eine andere Klasse nichtionischer Tenside sind Alkylpolyglucoside oder Hydroxyalkylpolyglucoside mit 8 bis 22, vorzugsweise 10 bis 18 Kohlenstoffatomen in der Alkylkette. Diese Verbindungen enthalten meist 1 bis 20, vorzugsweise 1,1 bis 5 Glucosideinheiten. Eine andere Klasse nichtionischer Tenside sind N-Alkylglucamide mit $C_6$-$C_{22}$-Al-

kylketten. Derartige Verbindungen erhält man beispielsweise durch Acylierung von reduzierend aminierten Zuckern mit entsprechenden langkettigen Carbonsäurederivaten.

Weiterhin eignen sich als nichtionische Tenside (D) noch Blockcopolymere aus Ethylenoxid, Propylenoxid und/ oder Butylenoxid (Pluronic- und Tetronic-Marken der BASF), Polyhydroxy- oder Polyalkoxyfettsäurederivate wie Polyhydroxyfettsäureamide, N-Alkoxy- oder N-Aryloxy-polyhydroxyfettsäureamide, Fettsäureamidethoxylate, insbesondere endgruppenverschlossene, sowie Fettsäurealkanolamidalkoxylate.

Die Komponente (D) liegt in der erfindungsgemäßen Textilwaschmittel-Formulierung vorzugsweise in einer Menge von 1 bis 20 Gew.-%, insbesondere 3 bis 12 Gew.-% vor. Es kann nur eine Klasse an nichtionischen Tensiden allein eingesetzt werden, insbesondere nur alkoxylierte $C_8$-$C_{22}$-Alkohole, man kann aber auch Mischungen aus verschiedenen Klassen verwenden. Innerhalb der einzelnen Klassen an nichtionischen Tensiden können auch Mischungen unterschiedlicher Species zum Einsatz gelangen.

Da die Balance zwischen den genannten Tensidsorten von Bedeutung für die Wirksamkeit der erfindungsgemäßen Waschmittel-Formulierung ist, stehen anionische Tenside (C) und nichtionische Tenside (D) vorzugsweise im Gew.-Verhältnis von 95:5 bis 20:80, insbesondere von 80:20 bis 50:50. Hierbei sind auch die Tensidbestandteile des erfindungsgemäßen Tensidgemisches zu berücksichtigen.

Des Weiteren können auch kationische Tenside (E) in den erfindungsgemäßen Waschmitteln enthalten sein.

Als kationische Tenside eignen sich beispielsweise Ammoniumgruppen enthaltende grenzflächenaktive Verbindungen wie z.B. Alkyldimethylammoniumhalogenide und Verbindungen der allgemeinen Formel

$$RR'R''R'''N^+X^-$$

in denen die Rest R bis R''' für Alkyl-, Arylreste, Alkylalkoxy-, Arylalkoxy-, Hydroxyalkyl(alkoxy)-, Hydroxyaryl(alkoxy)-Gruppen stehen und X ein geeignetes Anion ist.

Die erfindungsgemäßen Waschmittel können gegebenenfalls auch ampholytische Tenside (F) enthalten, wie z.B. aliphatische Derivate von sekundären oder tertiären Aminen, die in einer der Seitenketten eine anionische Gruppe enthalten, Alkyldimethylaminoxide oder Alkyl- oder Alkoxymethylaminoxide.

Komponenten (E) und (F) können bis 25%, vorzugsweise 3-15% in der Waschmittelformulierung enthalten sein.

**Bleichmittel**

In einer weiteren bevorzugten Ausführungsform enthält die erfindungsgemäße Textilwaschmittel-Formulierung zusätzlich 0,5 bis 30 Gew.-%, insbesondere 5 bis 27 Gew.-%, vor allem 10 bis 23 Gew.-% Bleichmittel (G). Beispiele sind Alkaliperborate oder Alkalicarbonat-Perhydrate, insbesondere die Natriumsalze.

Ein Beispiel einer verwendbaren organischen Persäure ist Peressigsäure, die vorzugsweise bei der gewerblichen Textilwäsche oder der gewerblichen Reinigung verwendet wird.

Vorteilhaft verwendbare Bleich- oder Textilwaschmittelzusammensetzungen enthalten $C_{1-12}$-Percarbonsäuren, $C_{8-16}$-Dipercarbonsäuren, Imidopercapronsäuren, oder Aryldipercapronsäuren. Bevorzugte Beispiele verwendbarer Säuren sind Peressigsäure, lineare oder verzweigte Octan-, Nonan-, Decan- oder Dodecanmonopersäuren, Decan- und Dodecandipersäure, Mono- und Diperphthalsäuren, -isophthalsäuren und -terephthalsäuren, Phthalimidopercapronsäure und Terephthaloyldipercapronsäure. Ebenfalls können polymere Persäuren verwendet werden, beispielsweise solche, die Acrylsäuregrundbausteine enthalten, in denen eine Peroxifunktion vorliegt. Die Percarbonsäuren können als freie Säuren oder als Salze der Säuren, vorzugsweise Alkali- oder Erdalkalimetallsalze, verwendet werden. Diese Bleichmittel (G) werden gegebenenfalls in Kombination mit 0 bis 15 Gew.-%, vorzugsweise 0,1 bis 15 Gew.-%, insbesondere 0,5 bis 8 Gew.-% Bleichaktivatoren (H) verwendet. Bei Color-Waschmitteln wird das Bleichmittel (G) (wenn vorhanden) in der Regel ohne Bleichaktivator (H) eingesetzt, ansonsten sind üblicherweise Bleichaktivatoren (H) mit vorhanden.

Als Bleichaktivatoren (H) eignen sich:

- polyacylierte Zucker, z. B. Pentaacetylglucose;

- Acyloxybenzolsulfonsäuren und deren Alkali- und Erdalkalimetallsalze, z. B. Natrium-p-isononanoyloxy-benzolsulfonat oder Natrium-p-benzoyloxybenzolsulfonat;

- N,N-diacylierte und N,N,N',N'-tetraacylierte Amine, z. B. N,N,N',N'-Tetraacetylmethylendiamin und -ethylendiamin (TAED), N,N-Diacetylanilin, N,N-Diacetyl-p-toluidin oder 1,3-diacylierte Hydantoine wie 1,3-Diacetyl-5,5-dimethylhydantoin;

- N-Alkyl-N-sulfonyl-carbonamide, z. B. N-Methyl-N-mesyl-acetamid oder N-Methyl-N-mesylbenzamid;

- N-acylierte cyclische Hydrazide, acylierte Triazole oder Urazole, z. B. Monoacetylmaleinsäurehydrazid;

- O,N,N-trisubstituierte Hydroxylamine, z.B. O-Benzoyl-N,N-succinylhydroxylamin, O-Acetyl-N,N-succinyl-hydroxylamin oder O,N,N-Triacetylhydroxylamin;

- N,N'-Diacyl-sulfurylamide, z. B. N,N'-Dimethyl-N,N'-diacetylsulfurylamid oder N,N'-Diethyl-N,N'-dipropionyl-sulfurylamid;

- Triacylcyanurate, z.B. Triacetylcyanurat oder Tribenzoylcyanurat;

- Carbonsäureanhydride, z. B. Benzoesäureanhydrid, m-Chlorbenzoesäureanhydrid oder Phthalsäureanhyrid;

- 1,3-Diacyl-4,5-diacyloxy-imidazoline, z. B. 1,3-Diacetyl-4,5-diacetoxyimidazolin;

- Tetraacetylglycoluril und Tetrapropionylglycoluril;

- diacylierte 2,5-Diketopiperazine, z.B. 1,4-Diacetyl-2,5-diketopiperazin;

- Acylierungsprodukte von Propylendihamstoff und 2,2-Dimethylpropylendiharnstoff, z.B. Tetraacetylpropylendiharnstoff;

- α-Acyloxy-polyacyl-malonamide, z. B. α-Acetoxy-N,N'-diacetylmalon-amid;

- Diacyl-dioxohexahydro-1,3,5-triazine, zum Beispiel 1,5-Diacetyl-2,4-dioxohexahydro-1,3,5-triazin;

- Benz-(4H)1,3-oxazin-4-one mit Alkylresten, z. B. Methyl, oder aromatischen Resten z.B. Phenyl, in der 2-Position.

Das beschriebene Bleichsystem aus Bleichmitteln und Bleichaktivatoren kann gegebenenfalls noch Bleichkatalysatoren enthalten. Geeignete Bleichkatalysatoren sind beispielsweise quaternierte Imine und Sulfonimine, die beispielsweise beschrieben sind in US-A 5 360 569 und EP-A 0 453 003. Besonders wirksame Bleichkatalysatoren sind Mangankomplexe, die beispielsweise in der WO-A 94/21777 beschrieben sind. Solche Verbindungen werden im Falle ihres Einsatzes in den Waschmittel-Formulierungen höchstens in Mengen bis 1,5 Gew.-%, insbesondere bis 0,5 Gew.-% eingearbeitet.

Neben dem beschriebenen Bleichsystem aus Bleichmitteln, Bleichaktivatoren und gegebenenfalls Bleichkatalysatoren ist für die erfindungsgemäße Textilwaschmittel-Formulierung auch die Verwendung von Systemen mit enzymatischer Peroxidfreisetzung oder von photoaktivierten Bleichsystemen denkbar.

### Enzyme

In einer weiteren bevorzugten Ausführungsform enthält die erfindungsgemäße Textilwaschmittel-Formulierung zusätzlich 0,05 bis 4 Gew.-% Enzyme (J). Vorzugsweise in Waschmitteln eingesetzte Enzyme sind Proteasen, Amylasen, Lipasen und Cellulasen. Von den Enzymen werden vorzugsweise Mengen von 0,1 - 1,5 Gew.-%, insbesondere vorzugsweise 0,2 bis 1,0 Gew.-%, des konfektionierten Enzyms zugesetzt. Geeignete Proteasen sind z. B. Savinase und Esperase (Hersteller: Novo Nordisk). Eine geeignete Lipase ist z.B. Lipolase (Hersteller: Novo Nordisk). Eine geeignete Cellulase ist zum Beispiel Celluzym (Hersteller: Novo Nordisk). Auch die Verwendung von Peroxidasen zur Aktivierung des Bleichsystems ist möglich. Man kann einzelne Enzyme oder eine Kombination unterschiedlicher Enzyme einsetzen. Gegebenenfalls kann die erfindungsgemäße Textilwaschmittel-Formulierung noch Enzymstabilisatoren, z. B. Calciumpropionat, Natriumformiat oder Borsäuren oder deren Salze, und/oder Oxidationsverhinderer enthalten.

### Weitere Inhaltsstoffe

Die erfindungsgemäße Textilwaschmittel-Formulierung kann neben den genannten Hauptkomponenten (A) bis (J) noch folgende weitere übliche Zusätze in den hierfür üblichen Mengen enthalten:

- Vergrauungsinhibitoren und Soil-Release-Polymere

Geeignete Soil-Release-Polymere und/oder Vergrauungsinhibitoren für Waschmittel sind beispielsweise:

Polyester aus Polyethylenoxiden mit Ethylenglycol und/oder Propylenglycol und aromatischen Dicarbonsäuren oder aromatischen und aliphatischen Dicarbonsäuren;

Polyester aus einseitig endgruppenverschlossenen Polyethylenoxiden mit zwei- und/oder mehrwertigen Alkoholen und Dicarbonsäure.

Derartige Polyester sind bekannt, beispielsweise aus US-A 3,557,039, GB-A 1 154 730, EP-A 0 185 427, EP-A 0 241 984, EP-A 0 241 985, EP-A 0 272 033 und US-A 5,142,020.

Weitere geeignete Soil-Release-Polymere sind amphiphile Pfropf- oder Copolymere von Vinyl-und/oder Acrylestern auf Polyalkylenoxide (vgl. US-A 4,746,456, US-A 4,846,995, DE-A 37 11 299, US-A 4,904,408, US-A 4,846,994 und US-A 4,849,126) oder modifizierte Cellulosen wie z.B. Methylcellulose, Hydroxypropylcellulose oder Carboxymethylcellulose.

- Farbübertragungsinhibitoren, beispielsweise Homo- und Copolymerisate des Vinylpyrrolidons, des Vinylimidazols, des Vinyloxazolidons oder des 4-Vinylpyridin-N-oxids mit Molmassen von 15.000 bis 100.000 sowie vernetzte feinteilige Polymere auf Basis dieser Monomere;

- nicht tensidartige Schaumdämpfer oder Schauminhibitoren, beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure;

- Komplexbildner (auch in der Funktion von organischen Cobuildem);

- optische Aufheller;

- Polyethylenglykole; Polypropylenglykole

- Parfüme oder Duftstoffe;

- Füllstoffe;

- anorganische Stellmittel, z. B. Natriumsulfat;

- Konfektiönierhilfsmittel;

- Löslichkeitsverbesserer;

- Trübungs- und Perlglanzmittel;

- Farbstoffe;

- Korrosionsinhibitoren;

- Peroxidstabilisatoren;

- Elektrolyte.

Die erfindungsgemäße Waschmittelformulierung ist vorzugsweise fest, d.h. liegt üblicherweise pulver- oder granulatförmig oder in Extrudat- oder Tablettenform vor.

Die erfindungsgemäßen pulver- oder granulatförmigen Waschmittel können bis zu 60 Gew.-% anorganischer Stellmittel enthalten. Üblicherweise wird hierfür Natriumsulfat verwendet. Vorzugsweise sind die erfindungsgemäßen Waschmittel aber arm an Stellmitteln und enthalten nur bis zu 20 Gew.-%, besonders bevorzugt nur bis zu 8 Gew.-% an Stellmitteln, insbesondere bei Kompakt- oder Ultrakompaktwaschmitteln. Die erfiridungsgemäßen festen Waschmittel können unterschiedliche Schüttdichten im Bereich von 300 bis 1.300 g/l, insbesondere von 550 bis 1.200 g/l besitzen. Moderne Kompaktwaschmittel besitzen in der Regel hohe Schüttdichten und zeigen einen Granulataufbau. Zur erwünschten Verdichtung der Waschmittel können die in der Technik üblichen Verfahren eingesetzt werden.

Die erfindungsgemäße Waschmittelformulierung kann nach üblichen Methoden hergestellt und gegebenenfalls konfektioniert werden.

Im Folgenden werden typische Zusammensetzungen für Kompakt-Vollwaschmittel und Color-Waschmittel angegeben (die Prozentangaben beziehen sich im Folgenden sowie in den Beispielen auf das Gewicht; die Angaben in Klammem bei den Zusammensetzungen (a) und (b) sind Vorzugsbereiche):

*(a) Zusammensetzung Kompakt-Vollwaschmittel (pulver- oder granulatförmig)*

| | |
|---|---|
| 1-60% (8-30%) | eines erfindungsgemäßen Tensidgemisches und gegebenenfalls mindestens eines anionischen Tensids (C) in Kombination mit einem nichtionischen Tensid (D) |
| 5-50% (10-45%) | mindestens eines anorganischen Builders (A) |
| 0,1-20% (0,5-15%) | mindestens eines organischen Cobuilders (B) |
| 5-30% (10-25%) | eines anorganischen Bleichmittels (G) |
| 0,1-15% (1-8%) | eines Bleichaktivators (H) |
| 0-1% (höchst.0,5%) | eines Bleichkatalysators |
| 0,05-5% (0,1-2,5%) | eines Farbübertragungsinhibitors |
| 0,3-1,5% | eines Soil-Release Polymers |
| 0,1-4% (0,2-2%) | Enzym oder Enzymmischung (J) |

Weitere übliche Zusätze:

Natriumsulfat, Komplexbildner, Phosphonate, optische Aufheller, Parfümöle, Schaumdämpfer, Vergrauungsinhibitoren, Bleichstabilisatoren

*(b) Zusammensetzung Color-Waschmittel (pulver oder granulatförmig)*

| | |
|---|---|
| 3 - 50% (8 - 30%) | eines erfindungsgemäßen Tensidgemisches und gegebenenfalls mindestens eines anionischen Tensids (C) in Kombination mit einem nichtionischen Tensid (D) |
| 10 - 60% (20 - 55%) | mindestens eines anorganischen Builders (A) |
| 0 - 15% (0 - 5%) | eines anorganischen Bleichmittels (G) |
| 0,05-5% (0,2-2,5%) | eines Farbübertragungsinhibitors |
| 0,1-20% (1-8%) | mindestens eines organischen Cobuilders (B) |
| 0,2-2% | Enzym oder Enzymmischung (J) |
| 0,2-1,5% | Soil-Release-Polymer |

Weitere übliche Zusätze:

Natriumsulfat, Komplexbildner, Phosphonat, optische Aufheller, Parfümöle, Schaumdämpfer, Vergrauungsinhibitoren, Bleichstabilisatoren.

Die Erfindung wird anhand der nachstehenden Beispiele näher erläutert.

**Beispiele**

Beispiel 1 "Tensid 1"

Ein Gemisch aus 2-Propytheptanol und 5-Methyl-2-propythexanol, das als technisches 2-Propylheptanol (2-PH) von der Fa. BASF vertrieben wird, als kurzkettige Komponente (A) (mittlerer Verzweigungsgrad von 1,15) und Talgfettalkohol ($C_{16}$-$C_{18}$-Alkohol) als langkettige Komponente (B) (mittlerer Verzweigungsgrad von ungefähr 0) werden in unterschiedlichen Massenverhältnissen (A:B = 2-PH : $C_{16}$-$C_{18}$-Alkohol) gemischt und anschließend mittels KOH-Katalyse ethoxyliert, wobei unterschiedliche HLB-Werte nach Griffin (das 20-fache des Massenanteils an Ethylenoxid im Produkt) eingestellt werden.

Vergleichsbeispiel 2 (= "Tensid 2")

Ein Gemisch aus Isodecanol (Exxal 10N, Fa. Exxon) (mittlerer Verzweigungsgrad von 2,2) und $C_{13}$-$C_{15}$-Oxo-alkohol (mittlerer Verzweigungsgrad von 0,6) ($C_{13}$-$C_{15}$ Alkohol, Fa. BASF) wird analog Beispiel 1 mit Ethylenoxid zu "Tensid 2" umgesetzt. Das Massenverhältnis A:B bezieht sich hier auf das Verhältnis an Isodecanol zu $C_{13}$-$C_{15}$-Oxo-alkohol.

**TESTS**

1) Netzen von Baumwolle nach EN 1772

Die nachfolgenden Tabellen zeigen die Netzzeiten (nach EN 1772, 2 g/l Soda) des erfindungsgemäßen Tensidgemisches ("Tensid 1") sowie des Referenzgemisches ("Tensid 2")

**Tensid 1**
**Netzen 0,5 g/l, 23 °C**

| HLB | A:B [g:g] | | | |
|---|---|---|---|---|
| | 1:0 | 9:1 | 8:2 | 7:3 |
| 11,6 | 60 | 40 | 40 | 60 |
| 12,5 | 60 | 60 | 60 | - )* |
| 14,3 | 100 | 100 | - | 200 |

**Tensid 2**
**Netzen 0,5 g/l, 23 °C**

| HLB | A:B [g:g] | | | |
|---|---|---|---|---|
| | 1:0 | 9:1 | 8:2 | 7:3 |
| 11,6 | 70 | 70 | 70 | 80 |
| 12,5 | 100 | 90 | 100 | - |
| 14,3 | 200 | 150 | - | 160 |

**Netzen 1,0 g/l, 23 °C**

| HLB | Verhältnis | | | |
|---|---|---|---|---|
| | 1:0 | 9:1 | 8:2 | 7:3 |
| 11,6 | 10 | 10 | 10 | 20 |
| 12,5 | 10 | 20 | 20 | - |
| 14,3 | 20 | 20 | - | 60 |

**Netzen 1,0 g/l, 23 °C**

| HLB | Verhältnis | | | |
|---|---|---|---|---|
| | 1:0 | 9:1 | 8:2 | 7:3 |
| 11,6 | 20 | 20 | 20 | 30 |
| 12,5 | 25 | 25 | 30 | - |
| 14,3 | 70 | 70 | - | 80 |

**Netzen 2,0 g/l, 23 °C**

| HLB | Verhältnis | | | |
|---|---|---|---|---|
| | 1:0 | 9:1 | 8:2 | 7:3 |
| 11,6 | 10 | 5 | 5 | 5 |
| 12,5 | 5 | 5 | 5 | - |
| 14,3 | 5 | 10 | - | 20 |

**Netzen 2,0 g/l, 23 °C**

| HLB | Verhältnis | | | |
|---|---|---|---|---|
| | 1:0 | 9:1 | 8:2 | 7:3 |
| 11,6 | 5 | 5 | 5 | 5 |
| 12,5 | 5 | 5 | 5 | - |
| 14,3 | 15 | 15 | - | 30 |

* nicht gemessen.

Fazit:

Man erkennt deutlich die bessere Netzleistung des Tensids 1 gegenüber Tensid 2, insbesondere bei höheren Verdünnungen.

2) Stabilität gegen lyotrope Salze (Beispiel NaOH)

2% Tensidgemisch wird mit wässrigen NaOH-Lösungen (0%, 1%, 2%, 3% usw.) gemischt, und nach 24 h Lagerung bei 23 °C wird geprüft, ob die Mischung stabil (klar oder trüb) ist oder ob Phasentrennung beziehungsweise Aufrahmung stattgefunden hat. Angegeben wird die höchste Konzentration an NaOH, bei der die Formulierung nach 24 h bei 23 °C noch optisch einphasig (klar oder trüb) aussieht.

**Tensid 1**

**% NaOH, 23 °C**

| HLB | A:B [g:g] | | | |
|------|-----|-----|-----|---|
|      | 9:1 | 8:2 | 7:3 |   |
| 11,0 | - )* | 2  | -   |   |
| 11,6 | 3   | -   | 5   |   |
| 12,5 | -   | 3   | -   |   |
| 14,0 | -   | 5   | -   |   |
| 14,3 | 5   | -   | 5   |   |

**Tensid 2**

**% NaOH, 23 °C**

| HLB | A:B [g:g] | | | |
|------|-----|-----|-----|---|
|      | 9:1 | 8:2 | 7:3 |   |
| 11,0 | -   | 2   | -   |   |
| 11,6 | -   | -   | -   |   |
| 12,5 | -   | 3   | -   |   |
| 14,0 | -   | 5   | -   |   |
| 14,3 | -   | -   | -   |   |

* nicht gemessen.

Fazit:

Tensid 1 und Tensid 2 verhalten sich gleich.

3) Bildung von Gelphasen mit Wasser

Tensid 1 wird mit Wasser vermengt und gut homogenisiert. Anschließend lässt man die Mischung 24 h bei 23 °C ruhen. Dann wird mittels eines Brookfield-Rheometers Spindel 2-7, 60 Upm, 23 °C) die Viskosität der Mischung bestimmt.

| Konzentration (%) | A : B = 9:1, HLB = 11,6 | A : B = 9:1, HLB = 14,3 | A : B = 7:3, HLB = 11,6 | A : B = 7:3, HLB = 14,3 |
|---|---|---|---|---|
| 90 | 70    | 120 | 90   | 200     |
| 80 | 80    | 140 | 120  | 210     |
| 70 | 140   | 150 | 5400 | 240     |
| 60 | 7100  | 180 | 7000 | 4700    |
| 50 | 35000 | 190 | 520  | >100000 |
| 40 | 300   | 140 | 130  | 210     |
| 30 | 260   | 50  | 110  | 40      |
| 20 | 260   | 20  | 100  | 10      |
| 10 | 70    | 10  | 20   | 5       |

4) Bestimmung der Emulsionsstabilität

Die Bestimmung der Emulsionsstabilität erfolgt mittels der Markermethode wie beschrieben in DE 10247086. In zwei 600 ml Bechergläser werden 1 Gew.-% Tensid mit 69 Gew.-% Wasser gemischt und anschließend 30 Gew.-% Öl - gelb beziehungsweise blau gefärbt - zugegeben. Dann wird mittels eines Propellerrührers für 15 Minuten eine Leistung von ca. 10 kW/m$^3$ eingetragen. Die erhaltenen Emulsionen werden gemischt und mittels statischer Laserstreuung die Tröpfchengrößenverteilung gemessen. In den folgenden Tabellen angegeben ist der $d_{50}$, der Median der Tröpfchen.

Anschließend werden die Emulsionen bei 23 °C gelagert. In periodischen Abständen werden die Emulsionen aufgeschüttelt, eine Probe entnommen und der Anteil an grünen Tropfen, entstanden durch Koaleszenz, mittels Mikroskopie und elektronischer Bildanalyse bestimmt. Die gemessenen Grünanteile werden anschließend gegen die Lagerzeit aufgetragen und durch folgende Funktion gemäß der Methode der kleinsten Quadrate gefittet:

$$\text{Grün(t)} = 100\,\% \bullet (1\text{-}\exp(\text{-}a \bullet t))$$

Die Stabilitätskonstante S erhält man schließlich aus S = -log(a • Monat).

Als Öle werden Sonnenblumenöl (56 mm$^2$/s bei 25 °C) und Paraffinöl (30 mm$^2$/s bei 25 °C) verwendet.

| Tensid 1 | | | | |
|---|---|---|---|---|
| Paraffinöl | A : B [g:g] | HLB | d 50 | S |
| | 9 : 1 | 11,6 | 40 | 0,3 |
| | 9 : 1 | 14,3 | 54 | 0,8 |
| | 7 : 3 | 11,6 | 52 | 1,0 |
| | 7 : 3 | 14,3 | 56 | 0,9 |
| Sonnenblumenöl | A : B [g:g] | HLB | d 50 | S |
| | 9 : 1 | 11,6 | 99 | 1,2 |
| | 9 : 1 | 14,3 | 68 | 1,2 |
| | 7 : 3 | 11,6 | 75 | 1,4 |
| | 7 : 3 | 14,3 | 71 | 1,1 |

| Tensid 2 | | | | |
|---|---|---|---|---|
| Paraffinöl | A : B [g:g] | HLB | d 50 | S |
| | 8 : 2 | 11 | 171 | -0,1 |
| | 8:2 | 12,5 | 188 | 0,7 |
| | 8 : 2 | 14 | 101 | 1,1 |
| Sonnenblumenöl | A : B [g:g] | HLB | d 50 | S |
| | 8 : 2 | 11 | 71 | -0,1 |
| | 8:2 | 12,5 | 74 | -0,7 |
| | 8:2 | 14 | 99 | -0,1 |

Fazit: Bei Paraffinöl findet man mit Tensid 1 im Verhältnis zu Tensid 2 deutlich kleinere Emulsionströpfchen bei annähernd gleicher Emulsionsstabilität. Bei Sonnenblumenöl findet man mit Tensid 1 im Verhältnis zu Tensid 2 eine drastisch verbesserte Emulsionsstabilität.

5) Bestimmung der Waschleistung bei der Hochtemperatur-Baumwollwäsche

Ca. 10 g WFK-Schmutzgewebe 10 D werden aufgerollt und in ein Waschkörbchen für ein Waschgerät Ahiba Texomat gegeben. 200 ml einer Waschflotte aus enthärtetem Wasser und 1 g/l des jeweiligen Tensids werden in den Glasbehälter eingefüllt und im Färbe- und Waschapparat auf 60 °C gebracht. Das Gerät wird gestartet und in 15 min von 60 °C auf 95 °C aufgeheizt, bei 95 °C wird für 15 min die Temperatur gehalten. Anschließend wird das Schmutzgewebe entnommen, zweimal heiß und einmal kalt gespült. Das Gewebe wird abgequetscht, getrocknet und heiß gemangelt. Die Beurteilung des Weißgrades auf der angeschmutzten Warenseite des Gewebes wird in Einheiten Berger auf einem geeigneten Spektrometer vorgenommen (Datacolor-Spektrometer Spectraflash 500).

| Konzentration | A : B = 9:1, HLB = 11,6 | A : B = 9:1, HLB = 14,3 | A : B = 7:3, HLB = 11,6 | A : B = 7:3, HLB = 14,3 |
|---|---|---|---|---|
| Weißgrad nach Berger | 54 | 57 | 57 | 58 |

6) Bestimmung der Waschleistung analog der Haushaltswäsche

Die Waschversuche wurden unter den folgenden Bedingungen durchgeführt:

| | |
|---|---|
| Waschbedingungen | Primärwäsche |
| Gerät | Launder-o-meter der Fa. Atlas, Chicago USA |
| Waschflotte | 250 ml |
| Waschdauer | 30 min. bei angegebener Temperatur (einschließlich Aufheizzeit) |
| Waschmitteldosierung | 5 g/l |
| Wasserhärte | 3 mmol/l Ca:Mg 4:1 |
| Flottenverhältnis | 1:12,5 |

Prüfgewebe der Fa. wfk Testgewebe GmbH, Brüggen, DE

| | |
|---|---|
| wfk 10 D | Hautfett/Pigment auf Baumwolle |
| wfk 20 D | Hautfett/Pigment auf 65% Polyester / 35% Baumwolle |
| wfk 10 PF | Pflanzenfett/Pigment auf Baumwolle |

Waschmittelformulierung

| | |
|---|---|
| Zeolith A | 30 % |
| Natriumcarbonat | 12 % |
| Natriumsilikat | 3 % |
| Tylose CR 1500 p | 1,2 % |
| Natriumperboratmonohydrat | 14,4 % |
| Tetraacetylethylendiamin | 4 % |
| Acrylsäure/Maleinsäure-Copolymer (MW 70000) | 5 % |
| Seife | 0,5 % |
| Natriumsulfat | 4 % |
| Wasser | 20,9 % |
| Tensid | 5 % |

Nach dem Spülen wurde geschleudert und die Gewebe zum Trocknen einzeln aufgehängt. Vermessen wurde das Gewebe mit einem Elrepho 2000 der Fa. Data Color, Heidenheim, und zwar 6 Messpunkte pro Gewebestück. Der Remissionswert wurde bei 460 nm ermittelt. Große Werte für die Remission geben dabei eine gute Schmutzablösung und ein hohes Primärwaschvermögen an.

Die gewaschenen Prüfgewebe werden mit einem Photometer der Fa. Datacolor (Elrepho 2000) vermessen. In der nachfolgenden Tabelle ist der Remissionswert (R bei 460 nm) in Prozent angegeben. Das Primärwaschvermögen ist umso besser, je höher der Remissionswert.

Bei jedem Lauf wurden als Kontrollversuche eine Formulierung enthaltend Lutensol AO 7 als Tensid ("Lutensol AO 7") sowie eine Formulierung, bei der das Tensid durch Wasser ersetzt wurde ("ohne Tensid"), mit gewaschen. Diese Versuche dienen zur Normierung der Waschergebnisse. Die Normierung wurde linear durchgeführt, wobei "ohne Tensid" auf 0% und "Lutensol AO 7" auf 100% gesetzt wurde:

Berechnungsformel:

*% (Waschleistung) = 100% · [Remission (Tensid 1 oder 2) – Remission („ohne Ten-sid")] / [Remission („Lutensol AO 7") – Remission („ohne Tensid")]*

**Tensid 1**

| Waschen bei 25°C | HLB | A:B [g/g] | Remission WFK | | | normiert: "ohne" = 0%, "Lutensol AO7" = 100% % Waschleistung WFK | | | Mittel |
|---|---|---|---|---|---|---|---|---|---|
| | | | 10 D | 20 D | 10 PF | 10 D | 20 D | 10 PF | wert |
| ohne Tensid | | | 51,6 | 44,1 | 42,7 | | | | |
| Lutensol AO 7 | | | 57,0 | 58,1 | 48,7 | | | | |
| Tensid 1 | 10,5 | 9:1 | 59,0 | 51,4 | 47,2 | 136% | 52% | 75% | 88% |
| Tensid 1 | 11,0 | 9:1 | 56,7 | 50,7 | 46,0 | 93% | 47% | 55% | 65% |
| Tensid 1 | 11,6 | 9:1 | 56,1 | 49,7 | 45,0 | 83% | 40% | 38% | 54% |
| Tensid 1 | 12,5 | 9:1 | 56,0 | 51,0 | 44,1 | 81% | 49% | 23% | 51% |
| Tensid 1 | 14,3 | 9:1 | 55,3 | 47,8 | 43,8 | 68% | 26% | 19% | 38% |
| Tensid 1 | 10,5 | 7:3 | 60,3 | 53,3 | 48,8 | 160% | 66% | 102% | 109% |
| Tensid 1 | 11,0 | 7:3 | 56,4 | 51,2 | 48,5 | 89% | 51% | 97% | 79% |
| Tensid 1 | 11,6 | 7:3 | 52,9 | 50,1 | 45,9 | 24% | 43% | 53% | 40% |
| Tensid 1 | 13,0 | 7:3 | 59,4 | 52,7 | 45,5 | 144% | 61% | 47% | 84% |
| Tensid 1 | 14,3 | 7:3 | 51,9 | 48,0 | 43,5 | 7% | 28% | 14% | 16% |

**Waschen bei 40°C**

| | HLB | A:B | 10 D | 20 D | 10 PF | 10 D | 20 D | 10 PF | Mittel wert |
|---|---|---|---|---|---|---|---|---|---|
| ohne Tensid | | | 52,5 | 45,8 | 44,8 | | | | |
| Lutensol AO 7 | | | 61,7 | 65,7 | 54,3 | | | | |
| Tensid 1 | 10,5 | 9:1 | 62,0 | 53,0 | 52,5 | 103% | 36% | 81% | 73% |
| Tensid 1 | 11,0 | 9:1 | 59,7 | 52,3 | 51,0 | 78% | 32% | 65% | 59% |
| Tensid 1 | 11,6 | 9:1 | 59,7 | 51,8 | 48,5 | 78% | 30% | 39% | 49% |
| Tensid 1 | 12,5 | 9:1 | 62,8 | 50,7 | 53,6 | 111% | 24% | 93% | 76% |
| Tensid 1 | 14,3 | 9:1 | 58,7 | 47,4 | 43,5 | 68% | 8% | -13% | 21% |
| Tensid 1 | 10,5 | 7:3 | 61,5 | 57,4 | 53,3 | 97% | 58% | 89% | 82% |
| Tensid 1 | 11,0 | 7:3 | 61,1 | 57,4 | 51,5 | 93% | 58% | 71% | 74% |
| Tensid 1 | 11,6 | 7:3 | 60,5 | 56,1 | 46,2 | 87% | 51% | 15% | 51% |
| Tensid 1 | 13,0 | 7:3 | 62,7 | 54,9 | 51,6 | 111% | 46% | 72% | 76% |
| Tensid 1 | 14,3 | 7:3 | 57,5 | 49,7 | 44,1 | 54% | 19% | -7% | 22% |

**Waschen bei 60°C**

| | | | | | | | | | |
|---|---|---|---|---|---|---|---|---|---|
| ohne Tensid | | | 55,0 | 46,3 | 47,8 | | | | |
| Lutensol AO 7 | | | 67,0 | 71,7 | 59,3 | | | | |
| Tensid 1 | 10,5 | 9:1 | 64,0 | 51,7 | 55,3 | 75% | 21% | 65% | 54% |
| Tensid 1 | 11,0 | 9:1 | 68,2 | 52,4 | 55,3 | 110% | 24% | 65% | 66% |
| Tensid 1 | 11,6 | 9:1 | 65,6 | 56,1 | 52,5 | 88% | 39% | 41% | 56% |
| Tensid 1 | 12,5 | 9:1 | 64,0 | 55,4 | 55,4 | 76% | 36% | 66% | 59% |
| Tensid 1 | 14,3 | 9:1 | 59,6 | 55,3 | 49,8 | 38% | 35% | 17% | 30% |
| Tensid 1 | 10,5 | 7:3 | 68,2 | 54,3 | 56,2 | 110% | 31% | 73% | 71% |
| Tensid 1 | 11,0 | 7:3 | 67,0 | 61,0 | 55,7 | 100% | 58% | 69% | 76% |
| Tensid 1 | 11,6 | 7:3 | 64,0 | 68,2 | 51,9 | 75% | 86% | 35% | 66% |
| Tensid 1 | 13,0 | 7:3 | 66,9 | 62,2 | 59,4 | 99% | 63% | 101% | 88% |
| Tensid 1 | 14,3 | 7:3 | 57,0 | 57,3 | 53,5 | 17% | 43% | 50% | 37% |

## Tensid 2

| Waschen bei 25°C | HLB | A:B [g/g] | Remission WFK 10 D | 20 D | 10 PF | % Waschleistung WFK 10 D | 20 D | 10 PF | Mittel wert |
|---|---|---|---|---|---|---|---|---|---|
| ohne Tensid | | | 54,2 | 43,4 | 42,7 | | | | |
| Lutensol AO 7 | | | 62,8 | 59,3 | 47,6 | | | | |
| Tensid 2 | 11,0 | 9:1 | 59,8 | 50,2 | 44,2 | 66% | 42% | 31% | 46% |
| Tensid 2 | 12,5 | 9:1 | 58,2 | 47,7 | 44,0 | 47% | 27% | 27% | 34% |
| Tensid 2 | 11,0 | 7:3 | 59,2 | 56,5 | 47,4 | 58% | 82% | 96% | 79% |
| Tensid 2 | 13,0 | 7:3 | 61,9 | 50,9 | 47,1 | 90% | 47% | 90% | 76% |

normiert: "ohne" = 0%, "Lutensol AO7" = 100%

## Waschen bei 40°C

| | HLB | A:B | 10 D | 20 D | 10 PF | 10 D | 20 D | 10 PF | Mittel |
|---|---|---|---|---|---|---|---|---|---|
| ohne Tensid | | | 55,2 | 43,0 | 44,9 | | | | |
| Lutensol AO 7 | | | 63,7 | 68,9 | 56,9 | | | | |
| Tensid 2 | 11,0 | 9:1 | 60,2 | 52,9 | 51,6 | 59% | 38% | 56% | 51% |
| Tensid 2 | 12,5 | 9:1 | 62,2 | 52,7 | 49,1 | 82% | 37% | 35% | 52% |
| Tensid 2 | 11,0 | 7:3 | 60,4 | 63,7 | 53,3 | 62% | 80% | 70% | 71% |
| Tensid 2 | 13,0 | 7:3 | 61,7 | 61,7 | 50,7 | 77% | 72% | 49% | 66% |

## Waschen bei 60°C

| | HLB | A:B | 10 D | 20 D | 10 PF | 10 D | 20 D | 10 PF | Mittel |
|---|---|---|---|---|---|---|---|---|---|
| ohne Tensid | | | 57,8 | 42,9 | 45,5 | | | | |
| Lutensol AO 7 | | | 67,0 | 73,1 | 63,1 | | | | |
| Tensid 2 | 11,0 | 9:1 | 65,9 | 55,7 | 53,4 | 87% | 42% | 45% | 58% |
| Tensid 2 | 12,5 | 9:1 | 66,3 | 62,1 | 53,2 | 92% | 63% | 44% | 66% |
| Tensid 2 | 11,0 | 7:3 | 64,3 | 62,1 | 54,2 | 71% | 64% | 49% | 61% |
| Tensid 2 | 13,0 | 7:3 | 62,4 | 65,9 | 55,1 | 50% | 76% | 55% | 60% |

Fazit:

Im Mittel erreicht Tensid 1 über alle 3 Gewebe und alle 3 Waschtemperaturen eine ca. 11 Prozentpunkte bessere Waschleistung als Tensid 2.

7) Schlagschaumtest

Ein Schlagschaumtest wurde gemäß EN 12728 durchgeführt (2 g/L, 40 °C). Die Ergebnisse sind in der nachfolgenden Tabelle zusammengefasst.

| A:B [g:g] | HLB | Tensid 1 Schaum in ml | Tensid 2 Schaum in ml |
|---|---|---|---|
| 9:1 | 11,6 | 140 | 250 |
| 9:1 | 12,5 | 270 | 220 |
| 9:1 | 14,3 | 400 | 390 |
| 8:2 | 11,6 | 200 | 260 |
| 8:2 | 12,5 | 280 | 290 |
| 7:3 | 11,6 | 170 | 220 |
| 7:3 | 14,3 | 340 | 390 |

Fazit:

Tensid 1 ist ein schwächerer Schäumer als Tensid 2.

In Summe ist das Tensid 1 dem Tensid 2 in Waschleistung, Schaumarmut, Netzgeschwindigkeit und Emulsionsstabilität deutlich überlegen, ohne Nachteile bei der Salzstabilität zu zeigen.

**Patentansprüche**

1. Tensidgemisch enthaltend

   (A) eine kurzkettige Komponente enthaltend das Alkoxylierungsprodukt von Alkanolen, wobei die Alkanole 8 bis 12 Kohlenstoffatome aufweisen und die mittlere Anzahl der Alkoxygruppen pro Alkanolgruppe im Alkoxylierungsprodukt einen Wert von 3 bis 30 annimmt und die Alkoxygruppen ausgewählt sind aus der Gruppe bestehend aus Ethoxy-, Propoxy-, Butoxy- und Pentoxygruppe und die Alkanole einen mittleren Verzweigungsgrad von mindestens 1 aufweisen; und
   (B) eine langkettige Komponente enthaltend das Alkoxylierungsprodukt von Alkanolen wobei das die Alkanole 16 bis 20 Kohlenstoffatome aufweisen und die mittlere Anzahl der Alkoxygruppen pro Alkanolgruppe im Alkoxylierungsprodukt einen Wert von 3 bis 30 annimmt und die Alkoxygruppen ausgewählt sind aus der Gruppe bestehend aus Ethoxy-, Propoxy-, Butoxy- und Pentoxygruppe und die Alkanole einen mittleren Verzweigungsgrad von 0,0 bis 0,3 aufweisen;

   oder deren Phosphat-, Sulfatester und Ethercarboxylate, wobei das Verhältnis des Gewichtsanteils der kurzkettigen Komponente (A) im Tensidgemisch zu dem Gewichtsanteil der langkettigen Komponente (B) im Tensidgemisch einen Wert im Bereich von 97 : 3 bis 30 : 70 annimmt.

2. Tensidgemisch nach Anspruch 1, **dadurch gekennzeichnet, dass** für die kurzkettige Komponente (A) und/oder die langkettige Komponente (B) der Anteil an Ethoxygruppen zur Gesamtzahl der Alkoxygruppen für das jeweilige Alkoxylierungsprodukt mindestens 0,5 beträgt.

3. Tensidgemisch nach Anspruch 1 oder 2, **dadurch gekennzeichnet, dass** das mindestens eine Alkanol der kurzkettigen Komponente (A) einen mittleren Verzweigungsgrad von 1,0 bis 2,0 aufweist.

4. Tensidgemisch nach einem der Ansprüche 1 bis3, **dadurch gekennzeichnet, dass** das Verhältnis des Gewichtsanteils der kurzkettigen Komponente (A) im Tensidgemisch zu dem Gewichtsanteil der langkettigen Komponente (B) im Tensidgemisch einen Wert im Bereich von 95 : 5 bis 50 : 50 annimmt.

5. Tensidgemisch nach einem der Ansprüche 1 bis 4, **dadurch gekennzeichnet, dass** dieses einen HLB-Wert nach Griffin im Bereich von 10 bis 15 aufweist.

6. Formulierung enthaltend ein Tensidgemisch nach einem der Ansprüche 1 bis 5.

7. Verfahren zur Herstellung eines Tensidgemisches nach einem der Ansprüche 1 bis 5, die Schritte enthaltend:

(a) Alkoxylierung eines Alkanolgemisches, wobei das Alkanolgemisch 8 bis 12 Kohlenstoffatome aufweist und die mittlere Anzahl der Alkoxygruppen pro Alkanolgruppe im Aikoxyüerungsprodukt einen Wert von 3 bis 30 annimmt und die Alkoxygruppen ausgewählt sind aus der Gruppe bestehend aus Ethoxy-, Propoxy-, Butoxy- und Pentoxygruppe und das Alkanolgemisch einen mittleren Verzweigungsgrad von mindestens 1 aufweist;
(b) Alkoxylierung eines Alkanolgemisches, wobei das Alkanolgemisch 16 bis 20 Kohlenstoffatome aufweist und die mittlere Anzahl der Alkoxygruppen pro Alkanolgruppe im Alkoxylierungsprodukt einen Wert von 3 bis 30 annimmt und die Alkoxygruppen ausgewählt sind aus der Gruppe bestehend aus Ethoxy-, Propoxy-, Butoxy- und Pentoxygruppen und das Alkanolgemisch einen mittleren Verzweigungsgrad von 0,0 bis 0,3 aufweist; und
(c) Mischen der in Schritt (a) und (b) erhaltenen Alkoxylierungsprodukte.

8. Verfahren zur Herstellung eines Tensidgemisches nach einem der Ansprüche 1 bis 5, die Schritte enthaltend

(a) Mischen eines ersten Alkanolgemisches, das 8 bis 12 Kohlenstoffatome und einen mittleren Verzweigungsgrad von mindestens 1 aufweist mit mindestens einem zweiten Alkanolgemisch, das 16 bis 20 Kohlenstoffatome und einen mittleren Verzweigungsgrad von 0,0 bis 0,3 aufweist; und
(b) Alkoxylieren des Gemisches aus erstem und zweitem Gemisch, wobei die Anzahl der Alkoxygruppen pro Alkanolgruppe im Alkoxylierungsprodukt einen mittleren Wert von 3 bis 30 annimmt und die Alkoxygruppen ausgewählt sind aus der Gruppe bestehend aus Ethoxy-, Propoxy-, Butoxy- und Pentoxygruppe.

9. Verwendung eines Tensidgemisches nach einem der Ansprüche 1 bis 5 oder einer Formulierung nach Anspruch 6 als Emulgator, Schaumregulierer, Netzmittel, insbesondere für harte Oberflächen, Feuchthaltemittel.

10. Verwendung nach Anspruch 9 in Waschmitteln, zur Reinigung harter Oberflächen, in kosmetischen, pharmazeutischen und Pflanzenschutzformulierungen, Lacken, Beschichtungsmitteln, Klebstoffen, Lederentfettungsmitteln, für die Textilindustrie, Faserverarbeitung, Metallverarbeitung, Lebensmittelindustrie, Wasserbehandlung, Papierindustrie, Fermentation oder Mineralverarbeitung und in Emulsionspolymerisationen.

**Claims**

1. A surfactant mixture comprising

(A) a short-chain component comprising the alkoxylation product of alkanols, where the alkanols have 8 to 12 carbon atoms and the average number of alkoxy groups per alkanol group in the alkoxylation product assumes a value from 3 to 30 and the alkoxy groups are chosen from the group consisting of ethoxy, propoxy, butoxy and pentoxy groups and the alkanols have an average degree of branching of at least 1; and
(B) a long-chain component comprising the alkoxylation product of alkanols where the alkanols have 16 to 20 carbon atoms and the average number of alkoxy groups per alkanol group in the alkoxylation product assumes a value from 3 to 30 and the alkoxy groups are chosen from the group consisting of ethoxy, propoxy, butoxy and pentoxy groups and the alkanols have an average degree of branching of from 0.0 to 0.3;

or phosphates, sulfate esters and ether carboxylates thereof, where the ratio of the weight fraction of the short-chain component (A) in the surfactant mixture to the weight fraction of the long-chain component (B) in the surfactant mixture assumes a value in the range from 97:3 to 30:70.

2. The surfactant mixture according to claim 1, wherein for the short-chain component (A) and/or the long-chain component (B), the fraction of ethoxy groups relative to the total number of alkoxy groups for the particular alkoxylation product is at least 0.5.

3. The surfactant mixture according to either of claims 1 or 2, wherein the at least one alkanol of the short-chain component (A) has an average degree of branching of from 1.0 to 2.0.

**4.** The surfactant mixture according to one of claims 1 to 3, wherein the ratio of the weight fraction of the short-chain component (A) in the surfactant mixture to the weight fraction of the long-chain component (B) in the surfactant mixture assumes a value in the range from 95:5 to 50:50.

**5.** The surfactant mixture according to one of claims 1 to 4, which has a HLB value according to Griffin in the range from 10 to 15.

**6.** A formulation comprising a surfactant mixture according to one of claims 1 to 5.

**7.** A method of producing a surfactant mixture according to one of claims 1 to 5, comprising the steps:

(a) alkoxylation of an alkanol mixture, where the alkanol mixture has 8 to 12 carbon atoms and the average number of alkoxy groups per alkanol group in the alkoxylation product assumes a value from 3 to 30 and the alkoxy groups are chosen from the group consisting of ethoxy, propoxy, butoxy and pentoxy groups and the alkanol mixture has an average degree of branching of at least 1;
(b) alkoxylation of an alkanol mixture, where the alkanol mixture has 16 to 20 carbon atoms and the average number of alkoxy groups per alkanol group in the alkoxylation product assumes a value from 3 to 30 and the alkoxy groups are chosen from the group consisting of ethoxy, propoxy, butoxy and pentoxy groups and the alkanol mixture has an average degree of branching of from 0.0 to 0.3; and
(c) mixing the alkoxylation products obtained in step (a) and (b).

**8.** A method of producing a surfactant mixture according to one of claims 1 to 5, comprising the steps

(a) mixing a first alkanol mixture which has 8 to 12 carbon atoms and an average degree of branching of at least 1 with at least one second alkanol mixture which has 16 to 20 carbon atoms and an average degree of branching of from 0.0 to 0.3; and
(b) alkoxylation of the mixture of the first and second mixture, where the number of alkoxy groups per alkanol group in the alkoxylation product assumes an average value of from 3 to 30 and the alkoxy groups are chosen from the group consisting of ethoxy, propoxy, butoxy and pentoxy groups.

**9.** The use of a surfactant mixture according to one of claims 1 to 5 or of a formulation according to claim 6 as emulsifier, foam regulator, wetting agent, in particular for hard surfaces, humectant.

**10.** The use according to claim 9 in detergents, for the cleaning of hard surfaces, in cosmetic, pharmaceutical and crop protection formulations, paints, coating compositions, adhesives, leather-degreasing compositions, for the textile industry, fiber processing, metal processing, food industry, water treatment, paper industry, fermentation or mineral processing and in emulsion polymerizations.

**Revendications**

**1.** Mélange de tensioactifs, contenant

(A) un composant à courte chaîne contenant le produit d'alcoxylation d'alcanols, les alcanols ayant de 8 à 12 atomes de carbone et le nombre moyen des groupes alcoxy par groupe alcanol dans le produit d'alcoxylation ayant une valeur de 3 à 30 et les groupes alcoxy étant choisis dans l'ensemble constitué par les groupes éthoxy, propoxy, butoxy et pentoxy et les alcanols ayant un degré moyen de ramification d'au moins 1 ; et
(B) un composant à longue chaîne contenant le produit d'alcoxylation d'alcanols, les alcanols ayant de 16 à 20 atomes de carbone et le nombre moyen des groupes alcoxy par groupe alcanol dans le produit d'alcoxylation ayant une valeur de 3 à 30 et les groupes alcoxy étant choisis dans l'ensemble constitué par les groupes éthoxy, propoxy, butoxy et pentoxy et les alcanols ayant un degré moyen de ramification de 0,0 à 0,3 ;

ou leurs phosphates, esters sulfate et éthercarboxylates, le rapport de la proportion en poids du composant (A) à courte chaîne dans le mélange de tensioactifs à la proportion en poids du composant (B) à longue chaîne dans le mélange de tensioactifs ayant une valeur dans la plage de 97:3 à 30:70.

**2.** Mélange de tensioactifs selon la revendication 1, **caractérisé en ce que** pour le composant (A) à courte chaîne et/ou le composant (B) à longue chaîne, la proportion de groupes éthoxy par rapport au nombre total des groupes alcoxy pour le produit d'alcoxylation respectif est d'au moins 0,5.

3.  Mélange de tensioactifs selon la revendication 1 ou 2, **caractérisé en ce que** ledit au moins un alcanol du composant (A) à courte chaîne a un degré moyen de ramification de 1,0 à 2,0.

4.  Mélange de tensioactifs selon l'une quelconque des revendications 1 à 3, **caractérisé en ce que** le rapport de la proportion en poids du composant (A) à courte chaîne dans le mélange de tensioactifs à la proportion en poids du composant (B) à longue chaîne dans le mélange de tensioactifs se situe dans la plage allant de 95:5 à 50:50.

5.  Mélange de tensioactifs selon l'une quelconque des revendications 1 à 4, **caractérisé en ce qu'**il présente une valeur HLB (rapport hydrophile-lipophile) selon Griffin dans la plage de 10 à 15.

6.  Composition contenant un mélange de tensioactifs selon l'une quelconque des revendications 1 à 5.

7.  Procédé pour la préparation d'un mélange de tensioactifs selon l'une quelconque des revendications 1 à 5, comprenant les étapes:

    (a) alcoxylation d'un mélange d'alcanols, le mélange d'alcanols ayant de 8 à 12 atomes de carbone et le nombre moyen des groupes alcoxy par groupe alcanol dans le produit d'alcoxylation ayant une valeur de 3 à 30 et les groupes alcoxy étant choisis dans l'ensemble constitué par les groupes éthoxy, propoxy, butoxy et pentoxy et le mélange d'alcanols ayant un degré moyen de ramification d'au moins 1 ;
    (b) alcoxylation d'un mélange d'alcanols, le mélange d'alcanols ayant de 16 à 20 atomes de carbone et le nombre moyen des groupes alcoxy par groupe alcanol dans le produit d'alcoxylation ayant une valeur de 3 à 30 et les groupes alcoxy étant choisis dans l'ensemble constitué par les groupes éthoxy, propoxy, butoxy et pentoxy et le mélange d'alcanols ayant un degré moyen de ramification de 0,0 à 0,3 ; et
    (c) mélange des produits d'alcoxylation obtenus dans l'étape (a) et l'étape (b).

8.  Procédé pour la préparation d'un mélange de tensioactifs selon l'une quelconque des revendications 1 à 5, comprenant les étapes :

    (a) mélange d'un premier mélange d'alcanols qui comporte de 8 à 12 atomes de carbone et présente un degré moyen de ramification d'au moins 1, avec au moins un deuxième mélange d'alcanols qui comporte de 16 à 20 atomes de carbone et présente un degré moyen de ramification de 0,0 à 0,3 ; et
    (b) alcoxylation du mélange des premier et deuxième mélanges, le nombre moyen des groupes alcoxy par groupe alcanol dans le produit d'alcoxylation ayant une valeur moyenne de 3 à 30 et les groupes alcoxy étant choisis dans l'ensemble constitué par les groupes éthoxy, propoxy, butoxy et pentoxy.

9.  Utilisation d'un mélange de tensioactifs selon l'une quelconque des revendications 1 à 5 ou d'une composition selon la revendication 6, en tant qu'émulsifiant, régulateur de mousse, agent mouillant, en particulier pour surfaces dures, humectant.

10. Utilisation selon la revendication 9, dans des produits de lavage, pour le nettoyage de surfaces dures, dans des compositions cosmétiques, pharmaceutiques et phytosanitaires, des peintures, des produits de revêtement, des adhésifs, des dégraissants pour le cuir, pour l'industrie textile, la transformation de fibres, la transformation de métaux, l'industrie alimentaire, le traitement de l'eau, l'industrie du papier, la fermentation ou la transformation de minéraux et dans des polymérisations en émulsion.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 2004091686 A
- JP 2003336092 A
- JP 2004035755 A
- WO 9411330 A
- WO 9411331 A
- DE 19921330 A
- EP 0050228 A
- WO 0132820 A
- EP 0620270 A
- WO 9527034 A
- EP 0681865 A
- EP 0616026 A
- EP 0616028 A
- DE 4237178 A
- US 5340495 A
- EP 0038591 A
- EP 0021491 A
- EP 0087035 A
- US 4604224 A
- GB 2013259 A
- EP 0522726 A
- EP 0384070 A
- WO 9424251 A
- EP 451508 A
- EP 396303 A
- US 3887806 A
- DE 4313909 A
- US 5227446 A
- DE 4415623 A
- US 5756456 A
- EP 001004 B
- US 5399286 A
- DE 4106355 A
- EP 0656914 A
- EP 454126 A
- EP 511037 B
- WO 9401486 A
- EP 581452 A
- WO 9322362 A
- WO 9216493 A
- US 5360569 A
- EP 0453003 A
- WO 9421777 A
- US 3557039 A
- GB 1154730 A
- EP 0185427 A
- EP 0241984 A
- EP 0241985 A
- EP 0272033 A
- US 5142020 A
- US 4746456 A
- US 4846995 A
- DE 3711299 A
- US 4904408 A
- US 4846994 A
- US 4849126 A
- DE 10247086